# EUROPÄISCHE PATENTANMELDUNG

(11) **EP 2 251 206 A1**
(43) Veröffentlichungstag der Anmeldung: **17.11.2010**
(21) Anmeldenummer: 09006574.9
(22) Anmeldetag: 15.05.2009
(51) Int. Cl.: B41M 5/26, B41M 5/28, C09D 5/26, C09D 7/12, D21H 23/22, D21H 21/28, D21H 19/38, D21H 19/80, D21H 17/67, D21H 17/66, C04B 41/80

(54) **Laser- und thermisch beschreibbare Oberflächenbeschichtung für Materialien**

(71) Anmelder: Mondi Uncoated Fine & Kraft Paper GmbH, 1032 Wien (AT)
(72) Erfinder: Palkovits, Roland, Dr., 2700 Wiener Neustadt (AT); Schalkhammer, Thomas, Dr., 3072 Kasten (AT); Kornherr, Andreas, Dr., 1100 Wien (AT)
(74) Vertreter: Landgraf, Elvira

(57) **Zusammenfassung**

Papier, Pappe, Wellkartons, Folien, spritz- oder druck-gegossene Kunststoffteile, Metall, keramische Oberflächen, Lackschichten oder Korrosionsschutzschichten beschichtet mit einer Mischung enthaltend zumindest ein Molybdänsalz gewählt aus der Gruppe Ammonium-, Alkylamin- oder Alkalimonybdate, -silico oder phosphomolydate oder den analogen Wolfram oder Vanadiumverbindungen und einer Deckschicht aus einem organischen oder silikoorganischen transparenten Material, wobei der gesamte Aufbau durch die Einwirkung von Licht räumlich definiert und strukturiert für das menschliche Auge erkennbar farblich verändert werden kann, wird vorgeschlagen.

## Beschreibung

Die Erfindung bezieht sich auf ein neuartiges Verfahren zur Herstellung einer speziellen Oberflächenbeschichtung für die farbgebende Beschriftung mittels eines IR Laser für Oberflächen von Papier, Folien, Kunststoff, Metall, keramische Oberflächen, Kunst- und Natursteinen, Lackschichten oder Korrosionsschutzschichten. Die Erfindung beschreibt Farb-Precursor, Pigmente bzw. Färbemittel, die für Laser- oder thermische Markierung verwendet werden können, und insbesondere Molybdänsalze in Kombination mit einer IR-transparenten Beschichtung sowie Methoden für deren Herstellung und Verwendung.

Farbgebende Beschriftungen von Materialien, wie Papier, Folien, Kunststoffen oder anderen Oberflächen erfolgen meist durch Drucken, beispielsweise mittels Flexo-, Offset- oder Tiefdruckgeräten für zumeist großvolumige Anwendungen oder via Drucker (bekannterweise zumeist Tintenstrahldrucker und Laserdrucker) oder für kleinvolumige Anwendungen an Ort und Stelle bzw. zur Bedruckung von Waren als Thermodrucker mit Thermopapier, Thermoetiketten oder thermosensitiven Schichten auf Verpackungen.
Dazu wird der Drucker mit Druckfarben- bzw. Tonerpatronen bestückt, die darin enthaltenden Pigmentzusammensetzungen werden beim Druck auf dem zu bedruckenden Material abgelagert oder ein bereits auf der Oberfläche aufgebrachtes Pigment wird via Hitzeeinwirkung farblich verändert (weiß auf schwarz, transparent auf weiß-trüb und dergleichen).

Die Verwendung von Titandioxid als ein Laser markierbares Pigment ist in US - 5.091.284 offenbart. Von Titandioxid produzierte Laserzeichen weisen jedoch schwache Kontraste auf und benötigen relativ hohe Laserenergie.
Obwohl viele verschiedene Arten von Pigmenten bekannt sind, existiert ein Bedarf für ein Pigment, das hohen Kontrast zu produzieren vermag, haltbarer ist und mit so geringer Laserenergie geschrieben werden kann, dass auch Schichten auf thermisch nicht belastbaren Materialien wie Papier, Pappe oder niedrige schmelzbaren Kunststoffen ohne deren Zerstörung beschriftet werden können.
Weitere Möglichkeiten der Generierung von farbigen Pigmentpartikel durch thermische Umwandlung aus einer farblosen oder schwach gefärbten Schicht einer
Precursorverbindungen umfassen, z.B. die Umwandlung von Silberacetat in dunkle oxidische Pigmente, die Umwandlung von Wismutsalzen wie z.B. Wismutoxalat, basisches Wismutcarbonat oder basisches Wismutnitrat in dunkle, gelbe, orange oder braune Pigmente, die Umwandlung von Nickeloxalat oder Kobaltoxalat in schwarze bzw. dunkel gefärbte Oxide, die Umwandlung von labilen Kupferverbindungen in Kupferoxide oder metallisches Kupfer genannt werden. Dies sind bekannte Prozesse. Alle diese Reaktionen laufen bei Temperaturen von unter 300°C bevorzugt um etwa 200°C ab. Extrem reaktive Verbindungen die bereits bei 120°C oder weniger eine chemische Umwandlung zeigen werden primär nicht eingesetzt, da sie die nötige Langzeitstabilität und Prozessierbar der Materialen negativ beeinflussen würden.

JP 53062532 A (16.11.1976): Thermisch verfärbbares Papier mit Beschichtung aus Mo(VI)-Verbindung und wasserfestem Binder
US 4237212 (17.8.1976): Prozess der Bilderzeugung, in dem ein Substrat mit einer Mischung von Polysäuren von Molybdän oder Wolfram (u.a. Natriummolybdat) und einem Reduktionsmittel (z.B.: Glucose, Thioharnstoff, Polyvinylalkohol) beschichtet wird, anschließend örtlich variabel mit UV-Licht beleuchtet wird um ein latentes Bild zu erzeugen, und danach mit längenwelligem Licht (VIS/IR) das Bild entwickelt wird. Es ist auch möglich die farbgebende Komponente und das Reduktionsmittel in separaten Schichten aufzubringen, wodurch die Notwendigkeit einer Fixierung eliminiert werden kann. Die Beschreibung ist bezüglich Rezepturen und Belichtungsstärken ziemlich detailliert.
JP 56077191 A (29.11.1976): Thermisch verfärbbare Zusammensetzung aus einer Co-, Ni-, Mo-, oder Pb-Verbindung und Thioharnstoff oder einem Thioharnstoffderivat als Reduktionsmittel.
Daneben gibt es einige Anwendungen von Molybdänverbindungen zur Erzeugung von mit Lasern beschreibbare Medien:
JP 59198192 A (26.4.1983): Metallfilm, der mit einem Polymer beschichtet ist, das Mo- oder Wo-Polysäuren enthält.
JP 62124986 A (27.11.1985): Medium für optische Aufzeichnungen (Compact Disc), das einen Mo- oder WO- haltigen Cyanin-Farbstoff enthält.
EP 0400305 B2 (9.4.1990 ): Mit IR-Lasern beschreibbarer Kunststoff, der 0,2 - 2,5% MoO₃ enthält. Die Beschreibbarkeit wird auch mit Kupferhydroxid-Phosphat erreicht.
JP 11029711 A (9.7.1997): Kunststoff mit 10-40% Mo-Verbindung
(Oxid, Hydroxid, Carbid, Fluorid, Silicid, Carbonyle, Molybdate) und Teilchengröße < 10 µm.
JP 2000313653 A (28.4.1999): Laserbeschreibbare Glasur für Keramik.

Aufgabe der Erfindung war es, ein Material bereitzustellen, das ohne Verwendung von toner-pigmenthaltigen Druckmitteln mit Informationen, wie Zeichen, Zeichenketten, Linien, Symbolen, Bildern und dergleichen versehen werden kann. Eine weitere Aufgabe der Erfindung war es ein Verfahren zur Herstellung derartiger Materialien bereitzustellen.
Eine weitere Aufgabe der vorliegenden Erfindung ist es daher ein in Qualität und Farbkontrast verbessertes Pigment bereitzustellen, welches mit so geringer Laserenergie beschrieben werden kann, dass es selbst auf Oberflächen wie Papier, Pappe, PE oder PP ohne Zerstörung derselben als Drucksystem mit bevorzugt schwarzer Druckfarbe eingesetzt werden kann und hier z.B. als Ersatz für Thermopapier dient.

Gegenstand der Erfindung sind daher Papier, Pappe, Wellkartons, Folien, wie Kunststofffolien, spritz- oder druck-gegossene Kunststoffteile, Metalls, keramische Oberflächen, Lackschichten oder Korrosionsschutzschichten beschichtet oder compoundiert mit einer Mischung enthaltend zumindest ein Molybdänsalz gewählt aus der Gruppe Ammonium-, Alkylamin- oder Alkalimolybdate, -silico oder phosphomolybdate oder eine analoge Wolfram- oder Vanadiumverbindung, wobei der gesamte Aufbau durch die Einwirkung von Licht räumlich definiert und strukturiert für das menschliche Auge erkennbar farblich verändert wird.

Vorteilhafterweise ist weiters eine Deckschicht aus einem organischen oder silikoorganischen transparenten Material vorgesehen.

Vorzugsweise weist die Deckschicht eine insbesondere IR-Transparenz auf, vorzugsweise von mehr als 10% eines Lasers.

Unter compoundieren wird hier die Einbringung der Mischung enthaltend zumindest ein Molybdänsalz gewählt aus der Gruppe Ammonium-, Alkylamin- oder Alkalimolybdate, -silico oder phosphomolybdate oder eine analoge Wolfram- oder Vanadiumverbindung direkt in die Substratmatrix verstanden.

Das erfindungsgemäße Verfahren nutzt die thermische Umwandlung von weißen (nahezu weißen oder hellen) Molybdän-, Wolfram-, oder Vanadiumsalzen durch thermische (Laser-)Energie entweder direkt im Substrat oder in einem Sandwich aus: 1.) Substrat, 2.) einem Molybdän-, Wolfram-, oder Vanadiumsalz, 3.) einer dichten Deckschicht (zumeist aus laser-transparentem Kunststoff) und allenfalls 4.) einem geruchsabsorbierenden Material (z.B. aus Cyclodextrin). Das Schichtsystem kann einseitig oder z.B. auf Papier als Substrat auch beidseitig ausgeführt sein.

Erfindungsgemäß bevorzugte Farb-Procursor, die mittels IR Laser gezielt farbverändert werden können, sind:
Molybdänsäure-Dinatriumsalz oder Dinatriummolybdat, CAS-Nr. 7631-95-0, Formel: Na₂MoO₄,
Ammoniummolybdat, Diammoniummolybdat u.ä., z.B. (NH₄)₆Mo₇O₂₄.₄H₂O CAS-Nummer: 13106-76-8 wasserfrei, 12054-85-2 Tetrahydrat, EG-Nummer: 236-031-3, Stoffgruppenschlüssel: 128120 Ammoniumsalze, 136500 Molybdänverbindungen, Molybdatophosphorsäure-Hydrat (Summenformel: H₃P(Mo₃O₁₀)₄ x H₂O, CAS-Nummer: 51429-74-4), und deren Salze alternativ zu z.B. Natriummolybdat.
Des Weiteren existieren im binären System Molybdän-Sauerstoff einige Molybdänoxide z.B. MoO₃, Mo₁₈O₅₂, Mo₈O₂₃, Mo₄O₁₁ und MoO₂, im System Wolfram-Sauerstoff die Phasen WO₂, W₁₈O₄₉, W₂₀O₅₂ und WO₃, sowie im System Vanadium-Sauerstoff die beiden Phasen V₆O₁₃ und V₂O₅.

Für das Overcoating bzw. die Deckschicht werden Polymere verwendet, wobei es prinzipiell keine Polymere gibt die zu 100% IR-transparent sind - die chemischen Bindungen des Polymers absorbieren bei spezifischen Frequenzen - wobei erfindungsgemäß solche Absorptionen soweit als möglich zu vermeiden sind. Polyolefine, wie Polyethylen oder Polypropylenschichten, dienen daher bevorzugt als Deckschichten.
Die Aufbringung erfolgt nach bekannten Techniken der Extrusionsbeschichtung oder Laminatherstellung (durch Aufblasen, Aufwalzen, Laminieren, Aufbringen aus Emulsion oder Suspension - allenfalls aus Lösung) von thermoplastischen Polymeren. Bei thermischem Abbau durch die primär indirekte Hitze des Lasers entstehen Radikale. Die Radikalbildung erfolgt an einem tertiären C-Atom leichter als einem sekundären bzw. primären C-Atom. In der Folge eines Oxidationsprozesses entstehen Hydroperoxide bzw. Peroxide. Die Peroxide bzw. deren Zerfallsprodukte führen die Kettenoxidation fort. Es werden laufend neue Radikale gebildet, die wiederum der Oxidation zugänglich sind. Die Kettenoxidation, wie sie in der folgenden Übersicht dargestellt ist, beinhaltet auch Abbruchreaktionen. Bei diesen Abbruchreaktionen und bei der β-Spaltung eines Radikals entstehen stabile Produkte, z.B. Carbonylverbindungen und verzweigte Ketten. Um den Kettenabbau zu verhindern, müssen die gebildeten Radikale mit Hilfe von Stabilisatoren oder Antioxidantien aus der Reaktionskette herausgenommen bzw. die gebildeten Peroxide unwirksam gemacht werden. Neben der undotierten Polyethylenfolie werden Folien z.B. mit Irganox oder Irgastab 2002 stabilisiert. Das wirksame Strukturelement in beiden Stabilisatoren ist die 3,5-di-tert.butly-4-hydroxyphenyl-Gruppe. Eine hohe Stabilisatordosis stellt zwar ein Sicherheitspotential zur Verhinderung des Kettenabbaus dar, kann aber auch zur unerwünschten Verfärbung der Folien im Laufe der Zeit führen und als unerwünschter Laserenergieabsorber wirken.

Erfindungsgemäß laserbeschreibbares beschichtetes Material, wie Papier ist zumindest drei- bis fünfschichtig aufgebaut - ein Kern, (beispielsweise Papierkern) und ggf. ein- oder beidseitig eine dünne Kunststoffschicht als Deckschicht - dazwischen der Farbbildner aus Molybdän-, Wolfram- oder Vanadiumverbindungen. Für die Deckschicht wird als Kunststoff bevorzugt Polyethylen verwendet. Ein Vorteil des polymerbeschichteten Papiers ist auch, dass der Papierträger infolge seiner Deckschicht weder Wasser noch Chemikalien aufnimmt, und chemische Vorgänge innerhalb der Papierschicht weitgehend von der Umwelt abschirmt. Ein weiterer Vorteil ist der problemlose Glanz, der von alleine entsteht.

Der Gegenstand der vorliegenden Erfindung ist es daher ein in Qualität und Farbkontrast verbessertes Pigment bereitzustellen, welches mit so geringer Laserenergie beschrieben werden kann, dass es selbst auf Oberflächen wie Papier, Pappe, PE oder PP ohne Zerstörung derselben als Drucksystem mit bevorzugt schwarzer Druckfarbe eingesetzt werden kann und hier z.B. als Ersatz für Thermopapier dient.
Es hat sich gezeigt, dass Mischungen und Reaktionsprodukte von Salzen auf z.B. Molybdän-Basis die gewünschten Eigenschaften aufweisen. Insbesondere bei thermischer Aktivierung durch den Laser kann ohne substantielle Zerstörung des Substrates die nötige chemische Energie bereitgestellt werden. Primär aber nicht ausschließlich werden die Molybdänsalze aus ihrer ionischen Form im Pigmentpartikel verwandeln deren Streufarbe ein dunkles Grau, Braun oder Schwarz ist. In Anwesenheit von Luft kommt es auch zu einer partiellen Oxidation des Trägers der sich durch Geruchsentwicklung bemerkbar macht. Erfindungsgemäß wichtig ist es daher, dass die Umwandlung der erfindungsgemäßen Pigmente bereits bei sehr niedrigen Temperaturen abläuft und schwarz-braune, oder sehr dunkle Reaktionsprodukte mit hohem Farbkontrast liefert. Hier sind die beschriebenen Pigmente den bekannten Pigmenten z.B. aus Thermopapier zumeist deutlich überlegen. Erfindungsgemäß ist diese Struktur zum Schutz mit einem transparenten Schutzfilm überzogen der für die angewendete Energie zumeist ein IR-Laser (bevorzugt CO₂ - oder Laserdioden) transparent ist. Die Stabilität der Produkte zeichnet die erfindungsgemäßen Schichten gegenüber Thermopapier oder thermisch beschreibbaren Etiketten aus.
Als Trägermaterial kommen Papier, Pappe, Wellkartons, Pigmentpartikel, Folien, insbesondere auch Kunsstofffolien, spritz- oder druck-gegossene Kunststoffteile, Metall, keramische Oberflächen, Lackschichten oder Korrosionsschutzschichten im Betracht.
Der gesamte Aufbau wird durch die Einwirkung von Licht, primär Laserlicht oder einer anderen Lichtquelle ausreichender Stärke, oder durch direkten Kontakt oder starke Annäherung an heiße Objekte räumlich definiert und strukturiert farblich verändert, wobei beliebige Zeichen, Buchstaben, Zeichenketten, Muster, Linien, Bilder, Symbole, Designs oder graphische Information durch eine Reaktion der Molybän-, Wolfram, oder Vanadiumverbindung sichtbar werden.
Die Erfindung beruht dabei auf einem neuartigen Drucksystem das Materialien direkt mit Wärme und oder Licht vorzugsweise Laser beschreibbar macht.
Im Gegensatz zu einem Laserdruck oder Tintenstrahldruck oder ähnlicher Druckverfahren ist hierbei die Farbe bzw. deren Vorstufe als Nanoschicht bereits im Material integriert und wird durch das Laserlicht nur örtlich gezielt verändert.

Die Laserbeschriftung von Folien, Papier und Pappe unter der Verwendung der erfindungsgemäßen Pigmente, unterscheidet sich von üblichen Thermopapieren und Thermoetiketten durch eine Vielzahl von Eigenschaften.
- über Jahre stabile Farbe (kein Ausbleichen wie Thermopapiere)
- hoher Kontrast wie Russ-basierter Lasertoner (im Gegensatz zu den meisten Thermopapieren)
- keine organisch-reaktiven Farbkomponenten mit hohem Allgeriepotential
- sichtbare und unsichtbare Elemente kombinierbar
- gut maschinenlesbar durch hohen Kontrast (Scannerkassen,...)
- extreme thermische Stabilität (keine Veränderung bei heißem Klima,...)
- kombinierbar mit Barcode und Labeltechnik
- Tastbarkeit

Auch die Verwendung von täglich dem Licht ausgesetzten Produkten wie Druckwaren, Papier oder Folien im Außenbereich kann auf Grund der bleichechten Färbung als wichtiger Einsatzbereich des neuen Produktes gesehen werden.
Der Aufbau besteht zumindest aus der Oberfläche eines Substrates bzw. Trägermaterials, einer Schicht des erfindungsgemäßen Pigments oder Metallsalzes zumeist gebunden mit einem Bindemittel und einer Deckschicht.
Um eine klare Farbgebung ohne Korn zu erhalten wird der Durchmesser der Mo-Partikel vorzugsweise kleiner als 50 µm gewählt, besonders bevorzugt kleiner als 20 µm.
Erfindungsgemäß werden primär farbige Pigmente aus deren weißen bzw. farblosen chemischen Vorstufen erzeugt wobei Umwandlungstemperaturen von mehr als 120°C Celsius (Thermostabilität bei Trockenprozessen!) und weniger als 300°C (Thermische Zerstörung des Trägermaterials) bevorzugt werden. Nur so kann der Laser in der zur Verfügung stehenden Zeit (typischerweise Milli- bis Mikrosekunden) die Schicht chemisch durchgehend und dauerhaft so verändern, dass die Farbe visuell geändert wird. "Massive" Schichten führen zu einer starken Eigenerwärmung für Materialien, welche z.B. bei Papier zu einer "Brandbeschriftung" mit entsprechender Abgasmenge und toxikologisch bedenklichen Produkten führt. Erfindungsgemäß kann das Drucksystem durch den Einsatz von selektiven thermosensitiven Strukturen dieses Problem vermeiden und durch eine chemische Umwandlung von Teilen der Struktur ohne signifikante Abgabe von signifikanten Mengen an gasförmigen Produkten den Schreibvorgang auch im Büroumfeld ermöglichen.

Auf saugfähigen Oberflächen kann die Molybdänverbindungsschicht direkt aufgebracht werden, Papier und große insbesondere 3-dimensionale Objekte werden hingegen mit Molydän-, Wolfram-, oder Vanadiumsalzen und/oder Bindemittel überzogen.
Papier kann jedoch auch direkt mit dem Farbeffekt versehen werden und die Zellulosefaser - Calciumcarbonatmischung mit den Molybdaten überzogen werden - die beobachteten Farben sind durchaus sehr intensiv und farbstark.
Die Molybdänsalzschichten werden z.B. durch Aufsprühen, Tauchen, chemische Prozesse, adsorptive Anlagerung aus Lösung, Anfiltern, kovalente Kopplung aus Lösung, oberflächenkatalysierte Verfahren oder Drucken mittels bekannter Druckverfahren, wie Felxo-, Tief-, Sieb-, Offset- Digitaldruckverfahren. Walzenauftragsverfahren mit Gleich- oder Gegenlauf, Curtain- Coating und dergleichen direkt auf das Material aufgebracht. Es können erfindungsgemäß zur Erzielung eines Druckbildes auch Mischungen von Molybdänsalzen mit bereits bekannten thermochromen Metallsalzen oder Farbstoffen verwendet werden um die gewünschten drucktechnischen Farbeffekte zu erreichen.

Um Laserenergie optimal zu absorbieren kann auf dem Substrat bzw. Trägermaterial der Molybdänsalzschicht zusätzlich ein IR-Farbstoff, vorzugsweise ein anorganisches Material mit 0.1 bis 5 Gewichtsprozent (bezogen auf das Gesamtprodukt) zugegeben werden - hierbei können Metallsalze, Mineralien, Glaspulver oder auch chromophore Verbindungen Verwendung finden.

Die Nachbeschichtung der Oberfläche erfolgt oft mit einem Material, welches in der Lage ist die Laserenergie zum Molybdänsalz durchzulassen aber den gesamten Aufbau zu schützen sodass keine Laser-thermischen Abbauprodukte insbesondere kein Partikel an die Luft gelangen um ein ungiftiges Material zu erhalten. Bei einer Wellenlänge des verwendeten Lasers von z.B. 10 µm sollte diese Schicht einige Mikrometer stark sein damit die Laserenergie nicht absorbiert wird sie aber ausreichend stabil ist.

Viele Polymere sind hierzu geeignet - PP, PE, PBu, Teflon, PVDF, fast alle Olefine zum Teil auch Aromaten wie Polystyrol und deren Derivate für Papier und Pappeartige Träger - die meisten anderen Deckschichten haben eine relativ starke Eigenabsorption bei der Wellenlänge des Lasers und führen zu unerwünschten Verbrennungs- bzw. Graviervorgängen.
Die Aufbringung erfolgt durch Extrusionsbeschichtung, Kaschieren, Aufblasen von thermoplastischen Kunststoffen, aber auch durch Aufbringung von Emulsionen oder Suspension allenfalls (aus Umweltgründen kaum einsetzbar) als Lösungen unter Abdampfen des Lösungsmittels.

Die erfindungsgemäßen technologischen Neuerungen sind:
- Farbstabile, nicht unter Einfluss von Licht bzw. Wärme bleichbare bedruckte Papiere, Folien und Materialoberflächen
- Erzeugung und Veränderung der Farbe durch lokale Laserenergie oder Wärmetransfer
- Kontrastreiche thermochrome Farbe erzeugt durch geringe Laserenergie

Die für die thermische Beschriftung benötigten Lichtquellen weisen bevorzugt geringe Strahlendivergenz, geringe Linien-/Brandbreite: (eine schmale Linienbreite ist die Frequenzreinheit der erzeugten Strahlung), große Energiedichte (durch die starke Bündelung und die Selbstverstärkung der Laserstrahlen im Resonator) und große zeitliche und räumliche Kohärenz. Damit sind primär Laser als Lichtquellen geeignet. Andere Lichtquellen sind nach geeigneter optischer Aufbereitung ebenfalls zu verwenden (LEDS, Hochenergielampen mit Hg oder Metalldampf o.ä.) weisen jedoch zumeist zu geringe Energiedichte auf. Thermische Auslösung des Effekts durch heiße Oberflächen sind ebenfalls möglich und kann analog dem Thermodruckern mit geringer Geschwindigkeit vorgenommen werden.

Mögliche Lasertypen sind Festkörper-Laser, Halbleiter-Laser, Flüssigkeits-Laser, Gas-Laser und chemische Laser - jedoch sind IR-Laser durch ihren bevorzugt thermischen Effekt die besten Laserquellen (CO₂, CO,.... - Gaslaser). Der Kohlendioxidlaser oft auch als CO₂-Laser bezeichnet, ist ein elektrisch angeregter Gaslaser. Er zählt neben den Festkörperlasern zu den am häufigsten eingesetzten und leistungsstärksten industriell eingesetzten Lasern.

Als Schreibsystem dient bevorzugt zumeist einen versiegelten Kohlenstoffdioxid-(C0₂) Laser, der intensive und unsichtbare Laserstrahlung mit einer Wellenlänge von 10,6 Mikron im infraroten Spektrum produziert oder eine Laserdiode im nahen IR oder Rotbereich.
Dämpfe und Rauch bei einem optimierten Schreibprozess sind minimal da es sich hierbei nicht um Gravierprozess mit Prozessgasen handelt. Jedoch soll die geringfügige Abtragung von Material insbesondere die Bildung von Partikein und geruchsaktiven Komponenten vermieden werden - dies erfolgt durch Reaktion in der Tiefe des Materials abgekapselt von der Oberfläche.

Die Laserintensität kann rein schwarz-weiß gesteuert werden oder auch dadurch kontrolliert werden, dass jeder bei der graphischen Zeichnung verwendeten Farbe bzw. Grauton ein Prozentsatz der Intensität von 0 - 100% zugewiesen wird. Da der Laser proportional gepulst oder seine Intensität anders gesteuert wird ist, stellt dieser Prozentsatz dar wie lange die Laserpulse dauernd oder wie hoch die Intensität des Laserlichts ist. Grundsätzlich wird die Intensitätseinstellung direkt darauf bezogen, wie tief der Farbeffekt ist. Hohe Intensitätseinstellungen und hohe Geschwindigkeiten produzieren ähnliche Effekte wie geringe Intensität und langsame Geschwindigkeit - bei geringerer Druckgeschwindigkeit des Systems. Im Rastermodus entspricht oft PPI (Laserpulse/inch) den typischen dpi-Werten eines Druckers.

Der erfindungsgemäße Aufbau einer Beschichtung mit den erfindungsgemäßen Pigmenten ist durch eine Zeichnung erläutert:

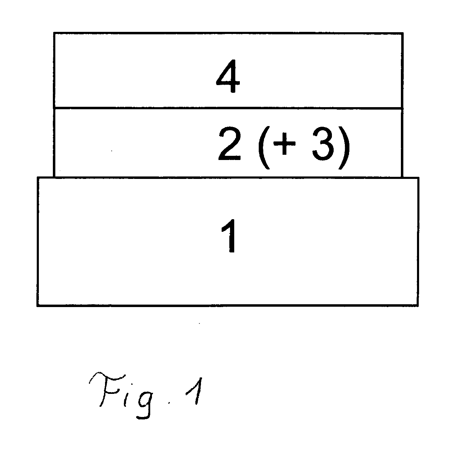

- Abbildung 1:: Aufbau der Pigmentschicht

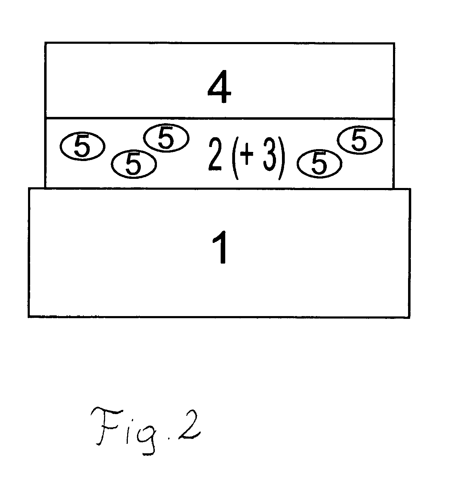

- Abbildung 2:: Aufbau der Pigmentschicht mit IR-Absorberzumischung

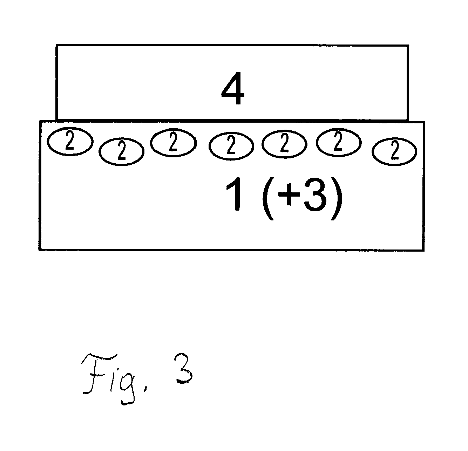

- Abbildung 3:: Aufbau der Pigmentschicht mit Mischung (Interdiffusion, Adsorpiton,...) aus 1 und 2

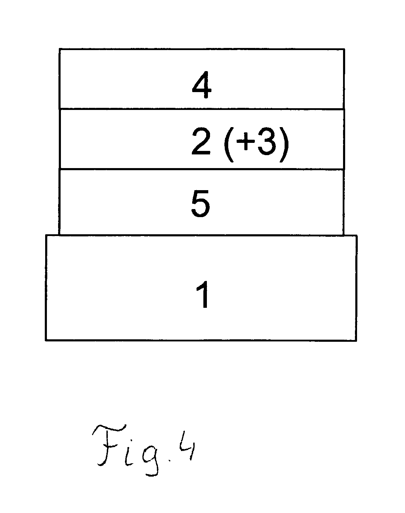

- Abbildung 4:: Aufbau der Pigmentschicht mit IR-Absorberschicht

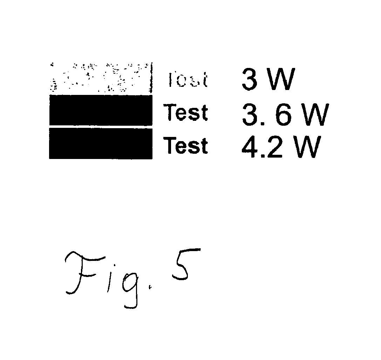

- Abbildung 5:: Laserfarbeffekt einer Natriummolybdatbeschichtung - oben 3 Watt Mitte 3.6 Watt Schreibleistung, und unten 4,2 Watt Schreibleistung bei 0.8 m/s Laserstrahlschreibgeschwindigkeit, auf Papier

Die Bezugszeichen sind wie folgt zuzuordnen:
1 Trägermaterial aus der Gruppe Papier, Pappe, Wellkartons, Folien, spritz- oder druck-gegossene Kunststoffteile, Metall, keramische Oberflächen, Lackschichten oder Korrosionsschutzschichten
2 Molybdänverbindung
3 Bindemittel allenfalls mit Geruchsadsorber
4 Deckschicht als Schutz - Laser-transparent
5 IR-Absorber oder IR-aktives farbmodifizierendes Agens

Die folgenden Beispiele beschreiben die technische Realisierung ohne diese zu beschränken:

### Beispiel 1. Molybdänsalz Beschichtung auf Papier

Natriummolybdat wird in variablem Mengenverhältnis mit einem Filmbildner wie Polyvinylpyrrolidon, Polyacrylamiden Hydroxyethylcellulose, Carboxymethylzellulose, Polyvinylalkohol, PVP-co-Polyvinylacetat oder vergleichbaren Polymeren vermischt (typischerweise 5 - 10% Molybdat mit 1-5% Bindemittel zur Filmbildung) und bis zur Auflösung gerührt.
Die Mischung wird in einer Coatingmaschiene (z.B. Papiermaschine mit Streichwerk) in dünner Schicht auf das Trägermaterial z.B. Papier aufgebracht. Es entsteht eine rein weiße Papieroberfläche. Das Material wird durch Aufblasen mit einer Schicht von PE-laminiert (einige µm stark) - alternativ auch mit PP oder PP- mit Kleberschicht in einem Heiss- oder Kaltlaminationsprozess.
Mit etwa 3-5 Watt Laserenergie wird das weiße Material mit schwarz-brauner Farbe beschriftet.

### Beispiel 2. IR-aktives Agens

Die Molybdänsalzmischung laut Beispiel 1 wird mit einem IR-aktiven Material (z.B. Quarzpulver, Glasflakes, Mineralien wie Kaolin,..) vermischt und auf die Oberfläche eines Objekts aufgebracht. Das Material dient dazu aktiv Laserenergie aufzunehmen und leitet sie als Hitze und oder chemische Energie an die Molybdänverbindungen weiter. Zur Bindung des Materials wird ein Bindemittel auf Polymer- oder Silikatbasis verwendet.
So kann der Farbton von Braun Richtung Schwarz veränderet werden.

### Beispiel 3. UV-Schutz

Schichten können nach Exposition an Licht insbesondere UV-Licht gelbliche oder graue Verfärbungen zeigen. Die Deckschicht (4) dient nicht nur zum Schutz der farbigen Schichten sondern filtert aktiv UV und nahen Blauanteile aus dem Spektrum und verhindert so ein vorzeitiges Vergilben. Als Filter können alle aus der Fotographie oder aus dem Sonnenschutz bekannte Filterpolymere und Pigmente verwendet werden.

### Beispiel 4. Komplexe Pigmente

Komplexe Pigmente sind aus vielen Bereichen bekannt. Ein Kern aus dem laseraktivem Pigment laut Beispiel 1 oder 2 wird mit farbmodifizierenden Agenzien vermischt z.B. schmelzbaren organischen Polymeren gegebenenfalls in Mischung mit anorganischen stark streuenden Mikro-/Nanopigmenten.

### Beispiel 5. Mit Polyethylen extrusionsbeschichtetes Laser-reaktives Papier

10% ige Natriummolybdat-lösung wird zusammen mit Stärke als Bindemittel auf Papier als Substrat aufgebracht. Anschließend wird Papier mittels Extrusionsbeschichten mit einem dünnen Polyethylenfilm von ca. 10 Mikrometern Dicke beschichtet. Das erwärmte thermoplastische Polyolefin wird hierzu in einer dünnen Bahn extrudiert und diese zusammen mit der Papierbahn über einen Kühlzylinder geführt, mit dessen Oberfläche der Kunststoff in Kontakt kommt. An dem Kühlzylinder entsteht ein stabiler Haftverbund zwischen dem Laser-reatkiven Papier und dem sich abkühlenden Kunststofffilm.

## Patentansprüche

1. Papier, Pappe, Wellkartons, Folien, wie Kunststofffolien, spritz- oder druck-gegossene Kunststoffteile, Metalle, keramische Oberflächen, Lackschichten oder Korrosionsschutzschichten beschichtet oder compoundiert mit einer Mischung enthaltend zumindest ein Molybdänsalz gewählt aus der Gruppe Ammonium-, Alkylamin- oder Alkalimolybdate, -silico oder phosphomolybdate oder eine analoge Wolfram- oder Vanadiumverbindung, wobei der gesamte Aufbau durch die Einwirkung von Licht räumlich definiert und strukturiert für das menschliche Auge erkennbar farblich verändert wird.

2. Papier, Pappe, Wellkartons, Folien, wie Kunststofffolien, spritz- oder druck-gegossene Kunststoffteile, Metalle, keramische Oberflächen, Lackschichten oder Korrosionsschutzschichten, **dadurch gekennzeichnet, dass** sie ein- oder beidseitig mit einer Deckschicht aus einem organischen oder silikoorganischen transparenten Material versehen sind.

3. Papier, Pappe, Wellkartons, Pigmentpartikel, Folien, spritz- oder druck-gegossene Kunststoffteile, Metalle, keramische Oberflächen, Lackschichten oder Korrosionsschutzschichten nach einem der Ansprüche 1 oder 2, **dadurch gekennzeichnet, dass** der Aufbau durch Einwirkung einer pixel- oder vektorartig arbeitenden Lichtquelle räumlich definiert und strukturiert für das menschliche Auge erkennbar farblich verändert ist und die farbliche Veränderung ohne signifikante Freisetzung von Partikeln erfolgt ist.

4. Papier, Pappe, Wellkartons, Folien, spritz- oder druck-gegossene Kunststoffteile, Metall, keramische Oberflächen, Lackschichten oder Korrosionsschutzschichten nach einem der Ansprüche 1 oder 2, **dadurch gekennzeichnet, dass** der Aufbau durch Laserlicht insbesondere eines Gaslasers z.B.: eines CO₂-Lasers, LED-Licht, Kurzbogenlampe, Blitzentladungslampen oder durch Thermoschreibköpfe verändert ist.

5. Papier, Pappe, Wellkartons, Folien, spritz- oder druck-gegossene Kunststoffteile, Metall, keramische Oberflächen, Lackschichten oder Korrosionsschutzschichten nach einem der Ansprüche 1 bis 4, **dadurch gekennzeichnet, dass** die durch die Hitze freigesetzten geruchsintensiven Moleküle durch Zusatz eines Absorbers, wie Cyclodextrinen, gebunden sind.

6. Papier, Pappe, Wellkartons, Folien, spritz- oder druck-gegossene Kunststoffteile, Metall, keramische Oberflächen, Lackschichten oder Korrosionsschutzschichten nach einem der Ansprüche 2 bis 5, **dadurch gekennzeichnet, dass** die für das menschliche Auge erkennbare Veränderung der Aufbaus auch durch eine Profilierung der Oberfläche tastbar ist, die Deckschicht dabei aber nicht perforiert ist.

7. Papier, Pappe, Wellkartons, Folien, spritz- oder druck-gegossene Kunststoffteile, Metall, keramische Oberflächen, Lackschichten oder Korrosionsschutzschichten nach einem der Ansprüche 1 bis 6, **dadurch gekennzeichnet, dass** zumindest ein Teil der farblichen Veränderung durch eine chemische Reaktion von thermischen Zersetzungsprodukten der Matrix, bevorzugt von Papier erfolgt.

8. Papier, Pappe, Wellkartons, Folien, spritz- oder druck-gegossene Kunststoffteile, Metall, keramische Oberflächen, Lackschichten oder Korrosionsschutzschichten nach einem der Ansprüche 1 bis 7, **dadurch gekennzeichnet, dass** die farblichen Veränderungen durch Generieren von chromophoren Verbindungen aus farblosen und oder farbschwachen Molybdänsalzen durch thermische Einwirkung des Lasers erfolgt.

9. Papier, Pappe, Wellkartons, Folien, spritz- oder druck-gegossene Kunststoffteile, Metall, keramische Oberflächen, Lackschichten oder Korrosionsschutzschichten nach einem der Ansprüche 2 bis 8, **dadurch gekennzeichnet, dass** die Zugabe von oder die Situierung einer Zwischenschicht zwischen Molybdänsalzschicht und Deckschicht aus IR-Absorbern, wie Glaspulver oder Mineralien die Farbstärke erhöht bzw. die Farbe verschiebt.

10. Papier, Pappe, Wellkartons, Folien, spritz- oder druck-gegossene Kunststoffteile, Metall, keramische Oberflächen, Lackschichten oder Korrosionsschutzschichten nach einem der Ansprüche 2 bis 9, **dadurch gekennzeichnet, dass** als Deckschicht über der Molybdänsalzschicht aus einem Polyolefin, bevorzugt Polyethylen oder Polypropylen oder einem Polyaromaten, bevorzugt Polystyrol, oder deren Copolymeren mit anderen Polymeren besteht.

11. Papier, Pappe, Wellkartons, Folien, spritz- oder druck-gegossene Kunststoffteile, Metall, keramische Oberflächen, Lackschichten oder Korrosionsschutzschichten nach einem der Ansprüche 2 bis 10, **dadurch gekennzeichnet, dass** als Deckschicht über der Molybdänsalzschicht eine Schicht mit Licht-streuenden Eigenschaften verwendet wird, die durch den Laser in eine transparente, geschmolzene Schicht umgewandelt wird.

12. Papier, Pappe, Wellkartons, Folien, spritz- oder druck-gegossene Kunststoffteile, Metall, keramische Oberflächen, Lackschichten oder Korrosionsschutzschichten nach einem der Ansprüche 2 bis 11, **dadurch gekennzeichnet, dass** die transparente Deckschicht eine Dicke von < 200 µm aufweist.

13. Papier, Pappe, Wellkartons, Folien, spritz- oder druck-gegossene Kunststoffteile, Metall, keramische Oberflächen, Lackschichten oder Korrosionsschutzschichten nach einem der Ansprüche 2 bis 11, **dadurch gekennzeichnet, dass** die transparente Deckschicht UV Stabilisatoren aufweist.

14. Verfahren zur Beschriftung von Papier, Pappe, Wellkartons, Folien, spritz- oder druck-gegossenen Kunststoffteilen, Metall, keramischen Oberflächen, Lackschichten oder Korrosionsschutzschichten nach einem der Ansprüche 1 bis 13, **dadurch gekennzeichnet, dass** zur räumlich definierten und strukturierten farblichen Veränderung der Beschichtung Laser mit einer Leistung bis zu 300 Watt verwendet werden.

15. Verfahren nach Anspruch 14, **dadurch gekennzeichnet, dass** der/die Laser (ein) Kohlendioxidlaser ohne externe Gasversorgung oder (eine) Laserdiode ist/sind.

16. Verfahren nach einem der Ansprüche 14 oder 15, **dadurch gekennzeichnet, dass** die Absorption der Laserlichtenergie durch Laserlicht-absorbierende Zusätze in der Schicht gesteigert wird.

17. Verfahren zur Herstellung von Papier, Pappe, Wellkartons, Folien, spritz- oder druck-gegossenen Kunststoffteilen, Metall, keramischen Oberflächen, Lackschichten oder Korrosionsschutzschichten nach einem der Ansprüche 1 bis 13, **dadurch gekennzeichnet, dass** die Aufbringung der laser- und thermosensitiven Pigmente durch druck-, lack- oder papiertechnische Verfahren wie Aufrakeln, Sprühen, Tauchbeschichten oder gängige Druckverfahren, wie Tief-, Flexo, Sieb-, Offset-, Digitaldruck, Curtain Coating oder Walzenauftragsverfahren mit Walzen- Gleich- oder Gegenlauf erflogt.

18. Verfahren nach Anspruch 17, **dadurch gekennzeichnet, dass** die Pigmente mit einem Bindemittel gemeinsam auf die Oberfläche des Materials gebunden werden.

19. Verfahren nach Anspruch 17, **dadurch gekennzeichnet, dass** das Bindemittel ein Kleber auf Stärke- oder modifizierter Cellulosebasis, auf Basis von Polyvinylalkohol, Polyvinylpyrrolidon, Polyacrylamide, deren Copolymeren oder auf Basis biologisch verträglicher und/oder abbaubarer Polymere, wie Hydroxyethylcellulose, Carboxymethylzellulose, Polyvinylalkohol, PVP-co-Polyvinylacetat ist.

20. Verfahren nach Anspruch einem der Ansprüche 17 bis 19, **dadurch gekennzeichnet, dass** ein Geruchsbindungsmittel zugefügt wird um die thermischen Abbauprodukte zu binden und/oder deren Geruch zu neutralisieren bevorzugt gewählt aus der Gruppe der Adsorbentien oder Klathratbildner bevorzugt Cyclodextrine.
